# EUROPÄISCHE PATENTSCHRIFT

(11) **EP 0 471 306 B1**
(45) Veröffentlichungstag und Bekanntmachung des Hinweises auf die Patenterteilung: **28.12.1994**
(21) Anmeldenummer: 91113393.2
(22) Anmeldetag: 09.08.1991
(51) Int. Cl.: B65D 65/46, A21D 13/00, A21D 13/08

(54) **Verrottbarer Behälter, Verfahren zu seiner Herstellung und Verwendung**
Biodegradable container, method for its manufacture and use
Récipient biodégradable, sa fabrication et son utilisation

(30) Priorität: 11.08.1990 DE 4025523
(43) Veröffentlichungstag der Anmeldung: 19.02.1992
(73) Patentinhaber: Munk, Werner Georg, D-88267 Vogt (DE); NORDMANN, RASSMANN GmbH & CO., D-20459 Hamburg (DE); Südmilch AG, D-70191 Stuttgart (DE)
(72) Erfinder: Munk, Werner Georg, D-88267 Vogt (DE); Förster, Axel, D-20259 Hamburg (DE); Klecker, Manfred, D-70191 Stuttgart (DE)
(74) Vertreter: Patentanwälte Ruff, Beier, Schöndorf und Mütschele

(56) Entgegenhaltungen:
- EP-A- 0 376 201
- DE-A- 3 923 497
- FR-A- 2 605 335
- FR-A- 2 611 732
- LU-A- 62 159

## Beschreibung

Die Erfindung betrifft einen Behälter, insbesondere einen verrottbaren Behälter, mit Wandungen auf Basis von Polysaccharid-Material sowie deren Herstellung und Verwendung.

Es besteht schon lange ein Bedürfnis, die Entstehung von großen Müllbergen zu vermeiden. Es wird deshalb wieder stärker auf die mehrfach verwendbaren Verpackungen und Behälter zurückgegriffen. Auch ist man bestrebt, Behälter und Verpackungen aus einem recyclingfähigen Material herzustellen, so daß, wenn die Verpackung oder der Behälter nur einmal verwendbar ist, wenigstens das Material nicht verloren geht und entweder zu demselben Zweck oder zu einem anderen Zweck wiederverwendbar ist.

Eine andere und auch schon sehr alte Möglichkeit ist die Verwendung von verrottbaren Materialien für Behälter und Verpackungen. Zu diesem Zweck wird schon seit langer Zeit Papier, Pappe und Karton verwendet, die in zunehmendem Maße durch Kunststoffe verdrängt wurden, auf die jedoch in verstärktem Maße wieder zurückgegriffen wird.

Die Verwendung von Materialien, die Nahrungsmittelqualität haben, zu Verpackungszwecken und als Behälter ist ebenfalls nicht neu. So gibt es seit langem Becher aus Waffelteig für Eis oder Schachteln für Süßwaren aus Schokolade. Hier sind die entsprechenden Behälter nicht nur Verpakkung, sondern auch Teil der verzehrbaren Ware und werden in der Regel mit verzehrt.

In der deutschen Offenlegungsschrift DE-36 43 199 A1 sind Verpackungen für Nahrungs- und Genußmittel beschrieben, die unter Verwendung eines Waffel- oder Stärketeiges gefertigt sind und nicht nur für die Aufbewahrung von Eis bei Gefriertemperaturen, sondern auch für Lebensmittel zur Aufbewahrung im sog. Kühlbereich, d.h. bei Temperaturen zwischen ca. 0 °C und 10 °C geeignet sind. Um die Backware gegen Feuchtigkeit des Inhalts zu schützen und stabil zu halten, ist der entsprechende Behälter mindestens an seiner inneren Oberfläche mit verschieden aufgebauten Fettglasuren beschichtet. Der Behälter kann, wenn das Nahrungsmittel verzehrt wird, mitgegessen werden. Er kann aber auch wie eine Wegwerfpackung benutzt und der Werkstoffverwertung über die Verrottung zugeführt oder durch problemlose Verbrennung beseitigt werden.

Die in der obigen deutschen Offenlegungsschrift beschriebenen Behälter haben zufriedenstellende Eigenschaften, sie sind jedoch nicht für alle Anwendungszwecke geeignet. Bei mechanischer Beanspruchung können aufgrund der Sprödigkeit des Waffelmaterials Risse auftreten, durch die die Dichtigkeit, insbesondere gegenüber einem flüssigen Inhalt, beeinträchtigt wird.

Der Erfindung liegt die Aufgabe zugrunde, Behälter zu schaffen, die ebenfalls im wesentlichen verrottbar sind, zugleich aber auch mechanischen Beanspruchungen stärker gewachsen sind.

Die Erfindung ist dadurch gekennzeichnet, daß das Material der Wandungen des Behälters im Innern mit einem Kautschuk imprägniert ist und/oder mindestens ein Teil der Oberfläche der Wandungen mit mindestens einer Kautschukschicht beschichtet ist.

Das an sich normalerweise poröse Wandungsmaterial ist durch die Imprägnierung und/oder Beschichtung vorzugsweise mindestens flüssigkeitsdicht, insbesondere für wäßrige und ölige Medien. Mit Vorteil ist das Material der Wandungen ein Polysaccharid-Material auf Basis von Cellulose, Stärke und/oder Getreide. Die erfindungsgemäßen Behälter sind im wesentlichen vollständig verrottbar, bis hin zur leichten Kompostierbarkeit und halten mechanischen Beanspruchungen in ausreichendem Maße stand. Vorzugsweise sind die Behälterwandungen aus einem Brei oder Teig geformt, der das Polysaccharid-Material und insbesondere den Kautschuk enthält. Durch die Verwendung eines Breies, insbesondere eines Papier- bzw. Cellulosebreies, oder eines Teiges, insbesondere eines Teiges für eine Dauerbackware, sind die Behälterwandungen auf einfache Weise herstellbar.

Das Wandungsmaterial des erfindungsgemäßen Behälters kann insbesondere aus mit Kautschuk imprägnierter und/oder beschichteter Pappe oder Karton bestehen. Dabei hat der Karton bzw. die Pappe vorzugsweise ein Gewicht von 150 bis 800 g/m², insbesondere 200 bis 600 g/m². Auf diese Weise werden Behälter mit ausreichender Dichtigkeit, Festigkeit und Elastizität erhalten, die bisher bekannte Behälter aus Kunststoffen und Schaumstoffen ersetzen können. Außerdem sind diese Behälter im wesentlichen vollständig verrottbar.

Es wurde weiterhin überraschenderweise gefunden, daß sowohl der ungebackene Teig einer Dauerbackware als auch der gebackene Teig mit Kautschuk verträglich ist und dabei erhebliche Qualitätsverbesserungen erzielt werden. Bei diesen Ausführungsformen des erfindungsgemäßen Behälters besteht das Wandungsmaterial aus einer Dauerbackware, die mit Kautschuk imprägniert und/oder beschichtet ist. Der Kautschuk verleiht der an sich wasserempfindlichen, spröden und porösen Backware Dichtigkeit, Festigkeit und Elastizität, so daß sich aus der Kombination von Teig einer Dauerbackware und Kautschuk Behälter- und Packungsformen herstellen lassen, wie sie bisher nur Kunststoffen und Schaumstoffen vorbehalten waren. Da Teig in trockener, gebackener Form an sich selbst ein Schaumprodukt darstellt, kommen wärmeisolierende und stoßdämpfende Eigenschaften hinzu, ähnlich wie sie bei den bekannten Verpackungen aus geschäumtem Polystyrol erwünscht sind.

Im Gegensatz zu den Kunststoffpackungen bestehen die erfindungsgemäßen Behälter bzw. Packungen zum überwiegenden Teil aus innerhalb kurzer Zeitdauer verrottbarem Material, insbesondere gebackenem Teig, so daß die Behälter einer Verrottung durch Mikroorganismen, beispielsweise durch Kompostierung, zugänglich sind. Übrig bleibt zunächst normalerweise nur der Kautschukanteil. Da der Kautschuk vorzugsweise unvernetzt ist, verrottet auch dieser nach einer entsprechenden Zeitdauer oder ist ohne Probleme verbrennbar. Wenn erwünscht, kann der Kautschuk auch mindestens teilweise vernetzt werden. Dies kann in üblicher Weise geschehen, insbesondere beim Herstellen des Behälters unter Erhitzen.

Die innere Imprägnierung der Wandungen mit Kautschuk vermindert die Feuchtigkeitsempfindlichkeit der Wandungen und führt zugleich zu einer hohen Elastizität und Bruchfestigkeit. Eine äußere Beschichtung bewirkt eine Dichtigkeit der Oberfläche, eine Feuchtigkeits-Unempfindlichkeit und eine Verfestigung. Welche Möglichkeit gewählt wird, hängt im wesentlichen vom Anwendungszweck des erfindungsgemäßen Behälters ab. Mit besonderem Vorteil sind die Wandungen sowohl im Innern mit Kautschuk imprägniert als auch außen mit Kautschuk beschichtet. Es wurde nämlich gefunden, daß die innere Imprägnierung einen hervorragenden Haftgrund für die äußere Beschichtung darstellt. Die äußere Beschichtung hat vorwiegend die Funktion einer Versiegelung der Oberfläche.

Der Kautschuk ist vorzugsweise gleichmäßig im Material der Wandungen verteilt, wobei eine weitgehend homogene Verteilung bevorzugt ist. Die begünstigenden Eigenschaften des Kautschuks wirken sich somit auf die gesamte Materialstärke aus. Der Kautschuk wirkt als Hydrophobierungsmittel für das Material und verleiht diesem weitgehend eine Feuchtigkeits-Unempfindlichkeit. Bei Verwendung einer Dauerbackware als Material der Wandungen ist der Kautschuk mit besonderem Vorteil zusammen mit dem Teig der Backware gebacken, wodurch der Kautschuk ein integrierter Bestandteil der Wandungen des Behälters ist.

Die bei der Erfindung verwendbare Dauerbackware ist vorzugsweise ein gebackener Waffelteig, wie er üblicherweise für Flach- und Formwaffeln, wie Hohlwaffeln, verwendet wird, und insbesondere ein gebackener Stärketeig.

Der Behälter kann die Form eines Bechers, einer Schachtel oder eine andere Packungsform haben. Die Wandstärke der Wandungen des Behälters kann in der Regel zwischen 1 bis 20 mm, insbesondere 2 bis 10 mm betragen, was beispielsweise etwa der Wandstärke von Oblaten und Waffeln, insbesondere Waffelbechern, entspricht. Für bestimmte Verpackungsformen können die Behälter jedoch auch als Formkörper mit unterschiedlich starker Wandstärke und Form ausgebildet, insbesondere in der Form einem zu verpackenden Gegenstand angepaßt sein, wie dies bei Verpackungen aus Kunststoffschäumen bekannt ist.

Wie oben bereits erwähnt, besteht der Behälter normalerweise zum überwiegenden Anteil, insbesondere zu mehr als zwei Drittel seines Gewichts, aus Polysaccharid-Material. Der Anteil an Kautschuk im Wandungsmaterial kann bei 1 bis 50 Gew%, vorzugsweise 3 bis 25 Gew%, insbesondere 5 bis 10 Gew% liegen, wobei normalerweise eine Obergrenze von 20 Gew%, insbesondere 15 Gew% nicht überschritten wird. Die Prozentangaben beziehen sich auf Gewichtsprozent der Trockenmasse. Diese Mengenangaben beziehen sich auf die Imprägnierung der Wandungen selbst. Die Menge an Kautschuk für eine Beschichtung hängt im wesentlichen von der gewünschten Schichtdicke des Kautschuks und von der Oberfläche des Behälters ab. Die Schichtdicke kann in weiten Grenzen variieren und liegt in der Regel zwischen 1 und 800 µm, insbesondere 2 bis 200 µm. Für gewöhnliche Zwecke reichen Schichtdicken im Bereich zwischen 30 und 100 µm aus, um eine ausreichende Dichtigkeit zu gewährleisten. Sind für besondere Anwendungszwecke dicke Schichtdicken im Bereich von über 100 µm gewünscht, dann liegen vorzugsweise die Kautschukmengen in der Imprägnierung bei ca. 10 Gew% und höher, um eine gute Haftung des Beschichtungsmaterials zu gewährleisten. Es hat sich gezeigt, daß bei zunehmender Schichtdicke ein zunehmender Gehalt an Kautschukmasse innerhalb der Wandung von Vorteil ist, um eine gute Haftung der Beschichtung zu gewährleisten. Ggf. können weitere Stoffe im Wandungsmaterial enthalten sein, wie beispielsweise Füllstoffe oder andere Zusatzstoffe, die üblicherweise dem verwendeten Polysaccharidmaterial und/oder dem Kautschuk zugesetzt werden können.

Der beim erfindungsgemäßen Behälter verwendete Kautschuk ist mit Vorteil ein lebensmittelrechtlich zugelassener Kautschuk. Dies gilt insbesondere dann, wenn Lebensmittel im Behälter aufbewahrt werden sollen und wenn damit zu rechnen ist, daß Teile des Behälters versehentlich oder absichtlich mitverzehrt werden. Bei einem eventuellen Verzehr werden die üblichen Teigbestandteile ohnehin verdaut. Der Kautschukanteil passiert den Körper, ähnlich wie dies der Fall ist, wenn jemand versehentlich einen Teil eines Kaugummis verschluckt. Bevorzugt ist der Kautschuk ein Naturkautschuk. Der Kautschuk kann wie bereits erwähnt, in besonderen Fällen auch vernetzt oder vulkanisiert sein. Er kann auch in Form einer vorgefertigten und ggf. vorgeformten Folie, insbesondere Gummihaut, auf die Flächen des Polysaccharidmaterials aufgebracht sein.

Der Behälter kann mit verschiedensten Arten von Waren befüllt sein, insbesondere solchen, die normalerweise in Wegwerfpackungen verpackt werden. Es kann sich dabei um trockene Güter, z.B. Stückware, handeln. Es können jedoch insbesondere auch flüssige, d.h. wäßrige und/oder ölige Waren, vorzugsweise Milchprodukte wie Joghurt und Milch, aber auch Mayonnaise u.dgl. in den erfindungsgemäßen Behältern abgepackt sein. Die Behälter können in geeigneter Weise verschlossen sein, beispielsweise durch Deckel aus dem gleichen Material oder einem anderen Material. Aufgrund der Feuchtigkeits-Unempfindlichkeit eignet sich der Behälter auch besonders für die Lagerung von Nahrungs- und Genußmitteln. Eine Lagerung eines nassen oder feuchten Inhalts bei Temperaturen über 0 °C ist auch über große Zeiträume ohne Beeinträchtigung der Packung möglich. Die erfindungsgemäßen Behälter sind deshalb mit besonderem Vorteil für die Aufbewahrung von Nahrungs- und Genußmitteln geeignet.

Es wurde überraschenderweise gefunden, daß der erfindungsgemäße Behälter mikrowellengeeignet ist. Dies bedeutet, daß er dazu verwendet werden kann, als Behälter oder Verpackung für Nahrungsmittel zu dienen, die zum Erhitzen oder zum Auftauen im Mikrowellenherd bestimmt sind. Somit ist der erfindungsgemäße Behälter nicht nur ein im wesentlichen verrottbarer Wegwerfbehälter bzw. eine Wegwerfpackung, sondern gleichzeitig auch noch mikrowellenbeständig. Der Behälter hat somit gleichzeitig einen hohen Gebrauchswert und ist leicht vernichtbar.

Die Erfindung betrifft auch ein Verfahren zur Herstellung des erfindungsgemäßen Behälters. Bei diesem Verfahren wird ein für die Herstellung von Behälterwandungen rezeptierter Brei oder Teig auf Basis von Polysacchariden unter Verwendung einer kautschukhaltigen Masse hergestellt und zu Behälterwandungen geformt und getrocknet. Zusätzlich oder anstelle dieser Verfahrensweise kann das Wandungsmaterial auf Polysaccharid-Basis an mindestens einem Teil seiner Oberfläche mit mindestens einer Schicht aus einem kautschukhaltigen Material versehen werden. Bei den beschriebenen Verfahren ist es bevorzugt, wenn der Behälter aus dem Brei oder Teig unmittelbar geformt wird. Der Brei und/oder Teig ist vorzugsweise gießfähig. Die Formung kann durch Gießen, Sprühen, Schöpfen oder durch andere geeignete Verfahren erfolgen.

In Weiterbildung ist es vorteilhaft, flächiges Polysaccharidmaterial, insbesondere Cellulosematerial, das vorzugsweise bereits mit Kautschuk imprägniert ist, an mindestens einer Seite (Fläche) mindestens einmal mit einer Schicht aus kautschukartigem Material zu versehen, insbesondere mit einer kautschukhaltigen Masse zu beschichten und den erfindungsgemäßen Behälter aus diesem beschichteten Material zu fertigen. Für diese Verfahrensweise ist als Cellulosematerial insbesondere Karton oder Pappe geeignet. Der Kautschuk kann auch als Kleber zum abdichtenden Verbinden einzelner Behälterteile vorgesehen sein.

Ein nach der Erfindung bevorzugtes Verfahren besteht darin, daß ein für eine Dauerbackware rezeptierter Teig unter Verwendung einer kautschukhaltigen Masse hergestellt, zum Behälter geformt und gebacken wird und/oder Behälterwandungen eines vorgebackenen Behälters mindestens an einem Teil ihrer Oberfläche mit mindestens einer Schicht aus einem kautschukartigen Material versehen werden.

Wie oben bereits erwähnt, ist es bevorzugt, sowohl den Brei oder Teig unter Verwendung von Kautschukmasse herzustellen als auch den geformten und insbesondere den gebackenen Behälter mit Kautschukmasse zu beschichten. Die Kautschukmasse hat vorzugsweise eine flüssige bis streichbare Konsistenz, so daß sie gut mit der Brei- oder Teigmasse verarbeitet werden kann bzw. zur Beschichtung des Behälters verwendbar ist. Für die Zubereitung des Teiges eignet sich besonders eine Latexmilch, d.h. eine wässrige Dispersion eines Kautschuks, insbesondere eines Naturkautschuks, da der Brei bzw. Teig ohnehin auf wäßriger Basis hergestellt wird und die Latexmilch Kautschukpartikel in wäßrigem System dispergiert enthält. Der Wassergehalt der Latexmilch kann dann bei der berechneten Wassermenge für den Teig berücksichtigt werden. Für die Beschichtung können grundsätzlich auch Kautschuklösungen verwendet werden.

Doch hat sich auch hier gezeigt, daß eine Latexmilch mit Vorteil verwendbar ist, selbst dann, wenn der Behälter nicht oder nur mit einem geringen Anteil an Kautschukmasse vorimprägniert ist. Hierzu eignet sich Latexmilch in konzentrierter bzw. kondensierter Form mit einem hohen Feststoff- und einem entsprechend verminderten Wasseranteil. Normalerweise wird eine Latexmilch verwendet, die 25 bis 50 Gew% Wasser enthält, wobei für die Fertigung des Breies oder Teiges eine Latexmilch mit einem Wassergehalt von 30 bis 50 Gew% bevorzugt ist und für die Beschichtung eine Latexmilch mit einem Wassergehalt von 25 bis 50 Gew%. Eine derartige Latexmilch trocknet schnell, so daß nur wenig Wasser in das Behältermaterial eindringen kann. Ein Eindringen kann auch noch dadurch verhindert werden, daß eine Latexmilch verwendet wird, die ein Verdickungsmittel enthält, wie beispielsweise Carboxymethylcellulose, und ggf. weitere Füllstoffe.

Bei der Herstellung des Breies oder Teiges kann die Latexmilch in eine bereits vorgefertigte Masse eingearbeitet werden. Es ist auch möglich, die übrigen Zutaten in die Latexmilch einzuarbeiten, besonders dann, wenn eine relativ dünnflüssige Latexmilch verwendet wird. Wie oben bereits erwähnt, wird, bezogen auf den Latexgehalt der Latexmilch, so viel Latexmilch für den Teig verwendet, daß sich im fertigen Produkt ein Kautschukgehalt von 1 bis 50 Gew%, vorzugsweise 3 bis 25 Gew.%, insbesondere 5 bis 10 Gew%, Kautschukmasse ergibt, bezogen auf den Trockengehalt.

Der Brei oder Teig kann insbesondere ein üblicher Waffelteig sein, wie er beispielsweise in der DE-OS 36 43 199 beschrieben ist. So eignet sich beispielsweise ein Waffelteig mit nachfolgender Zusammensetzung:

| | |
|---|---|
| Mehl | 20 - 40 Gew%, |
| | vorzugsweise ca. 25 Gew% |
| Kartoffelstärke | 5 - 25 Gew%, |
| | vorzugsweise ca. 20 Gew% |
| Zucker | 0 - 10 Gew%, |
| | vorzugsweise 2 - 8 Gew% |
| Salz | 0 - 1 Gew%, |
| | vorzugsweise ca. 0,4 Gew% |
| Lecithin | 0 - 0,5 Gew%, |
| | vorzugsweise ca. 0,3 Gew% |
| Fett | 1 - 5 Gew%, |
| | vorzugsweise ca. 3 Gew% |
| Sojamehl | 0 - 5 Gew%, |
| | vorzugsweise ca. 3 Gew% |
| Geschmacksstoffe | 0 - 0,5 Gew% |
| | vorzugsweise ca. 0,1 Gew% |
| Rest Wasser, | |

wobei je nachdem, ob eine innere Imprägnierung gewünscht ist und je nach dem Grad der Imprägnierung das Wasser ganz oder teilweise durch Latexmilch ersetzt werden kann.

Mit Vorteil kann der Brei oder Teig auch ein Stärketeig sein, der im wesentlichen, abgesehen von der Kautschukmasse, nur aus Stärke besteht, wobei insbesondere nicht aufgeschlossene Stärke bevorzugt ist. Die Stärke kann aber auch eine Mischung verschiedener Stärkeformen sein und modifizierte Stärke und ggf. einen geringen Anteil an kaltquellender Stärke enthalten. Auch können weitere Zusätze, die die Backfähigkeit der Stärke begünstigen, verwendet werden.

Es ist auch möglich, einen Teig aus einer Mischung von Stärke und Mehl herzustellen, der beispielsweise die nachfolgende Rezeptur haben kann:

| | | |
|---|---|---|
| Mehl | 30 - 50, | insbesondere ca. 40 Gew% |
| Stärke | 30 - 40, | insbesondere ca. 33 Gew% |
| Zucker | 0 - 20, | insbesondere ca. 13 Gew% |
| Salz | 0 - 1, | insbesondere ca. 0,7 Gew% |
| Letcithin | 0 - 1, | insbesondere ca. 0,5 Gew% |
| Fett | 3 - 7, | insbesondere ca. 5 Gew% |
| Aroma | 0 - 0,25, | insbesondere ca. 0,2 Gew% |
| Sojamehl | 3 - 7, | insbesondere ca. 5 Gew% |
| Wasser im Verhältnis Trockensubstanz zu Wasser von etwa 3 : 2. | | |

Die Konsistenz eines für die Dauerbackware verwendeten Breies hängt von der Art der Formung ab. Bei üblichen Backverfahren liegt der Brei in gießfähiger Form vor. Das Backen der Dauerbackware kann bei Temperaturen zwischen 150 bis 200 °C unter backspezifischem Druck vorgenommen werden, bis die Backware vollständig ausgebacken und trocken ist, was innerhalb weniger Minuten geschieht. Der Wassergehalt des Breies oder Teiges liegt gewöhnlich bei über 50 Gew%.

Sofern gefärbte Behälter hergestellt werden sollen, können dem Brei oder Teig geeignete Farben zugemischt werden, wobei die Farben besonders bei Verwendung eines farblosen bzw. weißen Stärkebreies besonders wirksam zum Ausdruck kommen.

Wie oben bereits erwähnt, wird der Kautschuk vorzugsweise nicht vernetzt. Es findet bei Verwendung von Latexmilch lediglich eine Koagulation der Kautschukteilchen statt, was durch Wasserentzug erfolgt und auch durch Entzug von Ammoniak, der normalerweise zur Stabilisierung des Latex verwendet wird. Die erfindungsgemäßen Behälter lassen sich in steriler Form herstellen. Insbesondere durch einen Backvorgang wird ohnehin ein steriler Behälter erhalten. Die Latexmasse, insbesondere die für die Beschichtung verwendete Latexmasse kann vor ihrer Anwendung sterilisiert werden. So kann eine für die Beschichtung vorgesehene Latexmilch vor ihrer Anwendung durch Erhitzen sterilisiert werden, insbesondere bei Temperaturen im Bereich von 130 - 135 °C, wobei vorzugsweise Ammoniak zur Stabilisierung zugegen ist.

Die Beschichtung kann durch übliche Beschichtungstechniken vorgenommen werden, beispielsweise durch Tauchen, Aufstreichen, Sprühen oder Bespülen. In der Regel wird mindestens diejenige Fläche des Behälters beschichtet, die die durch die Beschichtung erzielbare Eigenschaften erhalten soll, so zum Beispiel die Innenfläche, wenn es um Abdichtung gegenüber im Behälter enthaltene Flüssigkeiten geht, oder die Außenfläche, wenn es um Schmutzabweisung geht. In der Regel wird die gesamte Oberfläche des Behälters beschichtet.

Die Beschichtung kann mehrmalig durchgeführt werden, in der Regel reicht aber ein einmaliges Beschichten aus. Die Oberflächenstruktur des Wandungsmaterials hat einen gewissen Einfluß auf die Qualität der Beschichtung und deren Haftfähigkeit. Eine feinporöse bis glatte Oberfläche hat sich hierbei als besonders günstig erwiesen. Da die bei der Erfindung verwendbaren Dauerbackwaren in der Regel in Formen, insbesondere in im wesentlichen geschlossenen Formen hergestellt werden, kann in diesen Fällen die Oberfläche der Behälter durch die Oberfläche der Backform, die Verwendung eines Trennmittels und durch geeignete Wahl der Backbedingungen entsprechend gesteuert werden.

Weitere Merkmale der Erfindung ergeben sich aus der nachfolgenden Beschreibung von bevorzugten Ausführungsformen in Verbindung mit den Unteransprüchen. Hierbei können die einzelnen Merkmale jeweils für sich allein oder zu mehreren in Kombination miteinender bei einzelnen Ausführungsformen der Erfindung verwirklicht sein.

### Beispiel 1

Eine Backmasse in Form eines Stärketeigs wurde hergestellt durch Vermischen von
1000 g Stärke in nicht aufgeschlossener und/oder modifizierter Form,
70 g Naturlatex mit einem Feststoffgehalt von 50 % (mit Ammoniak stabilisiert),
1000 g Wasser
1 g Verdickungsmittel in Form von aufgeschlossener kaltquellender Stärke oder Carboxymethylcellulose,
Farbstoffe in gewünschter Menge.

Die Bestandteile wurden bei Raumtemperatur miteinander vermischt, wobei die Stärke in üblicher Weise in das Wasser eingerührt wurde. Die Latexmilch kann dem Wasser vorher oder nach dem Einrühren der Stärke beigegeben werden. Die Backmasse war noch fließfähig und wurde in eine Backform gegossen, die mit einem Trennmittel vorbehandelt war. Der Backprozeß dauerte weniger als 2 Minuten bei einer Backtemperatur von 160 °C. Dabei schäumte die Stärke unter gleichzeitigem Entweichen von Wasserdampf zu einem feinporigen Schaumprodukt auf. Die Form war so bemessen, daß ein Trinkbecher mit einer Wandstärke von 3 mm erhalten wurde.

Der erhaltene Becher wurde einer Zwischenkonditionierung bei 45 °C und 70 bis 75 % relative Luftfeuchte unterworfen, während er noch in der Backform gehalten oder in eine entsprechende andere Form umgesetzt war. Danach wurde die innere Oberfläche des Trinkbechers mit konzentriertem Pflanzenlatex mit einem Feststoffgehalt von 40 Gew% bei Umgebungstemperatur einmal ausgesprüht, wobei sich eine geschlossene Latexschicht bildete. Die Latexmilch enthielt 20 Gew% mineralische Füllstoffe und 1,5 Gew.% Verdickungsmittel und den gleichen Farbstoff wie die Backmasse. Anschließend wurde in einem Ofen 8 Minuten lang bei einer Temperatur von 70 °C getrocknet, wodurch sich die Latexmilch zu einem Latexfilm mit einer Schichtdicke von 100 µm verfestigte, die fest an der feinporigen Oberfläche des latexhaltigen Backproduktes haftete.

Die Latexmilch war vor dem Aufsprühen bei 135 °C durch Kurzzeit-Erhitzen sterilisiert worden. Der fertige Becher wurde nochmals unter den oben genannten Bedingungen konditioniert, wobei die Umgebungsbedingungen soweit wie möglich steril gehalten wurden. Die fertigen Becher wurden ineinander gestapelt und in einer Cellophanhülle luftdicht verpackt.

Bei Gebrauch wurde der Stapel in einen Getränkeautomaten gesetzt, der mit verschiedenen heißen und kalten Getränken befüllt war. Die Becher eigneten sich hervorragend als Trinkbecher und boten bei heißen Getränken gleichzeitig eine gute Wärmeisolation gegen den heißen Getränkeinhalt.

Ein Becher wurde mit einem kalten Tee gefüllt und anschließend in einen Mikrowellenherd gestellt, und 40 Sekunden lang unter Mikrowelle bei 720 W bis zum Kochen erhitzt. Weder der Becher noch die Innenbeschichtung zeigten irgendwelche Veränderungen.

### Beispiel 2

Ein Stärkebrei wurde in ähnlicher Weise hergestellt wie in Beispiel 1, wobei jedoch der Anteil an Pflanzenmilch verdreifacht wurde, was zu einem Kautschukgehalt in der fertigen Backware von etwa 15 Gew% führte. Die Wassermenge wurde in entsprechender Weise zurückgenommen. Aus der Backmasse wurde in zwei verschieden großen Formen eine Schachtel mit Unterteil und Oberteil gebacken. Es wurde ein feinporiges Produkt mit nahezu geschlossener, sich samtartig anfühlender Oberfläche erhalten. Schachtel-Oberteil und Schachtel-Unterteil wurde ohne Beschichtung konditioniert. Die beiden Schachtelteile hatten eine im Vergleich zu einem reinen Stärketeig hohe Bruchfestigkeit und Elastizität und ließen sich ohne Schwierigkeiten wiederholt schließen und öffnen, ohne die Form zu verlieren.

### Beispiel 3

Es wurde ein kombinierter Mehl/Stärke-Teig unter Verwendung von 500 g Mehl, 500 g nicht aufgeschlossene Stärke, 5 % Sojafett und 100 g Pflanzenlatex mit einem Feststoffgehalt von 60 % zubereitet. Die Teigmasse enthielt noch 1 Gew% Verdickungsmittel. Die Wassermenge wurde so eingestellt, daß insgesamt ein noch gießfähiger Brei erhalten wurde. Der Brei wurde unter den in Beispiel 1 beschriebenen Bedingungen zu einem Joghurtbecher mit einem Becherinhalt von 500 ml geformt und ausgebacken, wobei der Becher eine Wandstärke von 3,5 mm hatte. Nach Zwischenkonditionierung wurde der Becher, wie in Beispiel 1 beschrieben, mit einer Latexmilch beschichtet, wobei die Beschichtung jedoch innen und außen, d.h. über die gesamte Becheroberfläche erfolgte. Für das Beschichten wurden ca. 0,7 g Latexmilch pro 100 cm² Oberfläche verwendet, wobei die Latexmilch einen Feststoffgehalt von ca. 50 % hatte. Die erhaltene Kautschukbeschichtung hatte eine Schichtdicke von ca. 50 µm. Nach dem Konditionieren wurde der Becher mit Wasserperoxid besprüht, um eine nochmalige Sterilisierung vorzunehmen, danach wurde er mit Frisch-Joghurt befüllt und am oberen Rand mit einer Heißsiegelfolie verschlossen.

Der gefüllte Joghurtbecher konnte in üblicher Weise im Kühlbereich, z.B. in Kühlschränken, gelagert werden. Beim Verzehr zeigte der Joghurt im Vergleich zu in anderen Gefäßen, z.B. Glasgefäßen oder Polystyrolbechern, aufbewahrtem Joghurt keine geschmacklichen oder sonstigen Veränderungen. Der Becher wurde nach Gebrauch in die Mülltonne geworfen, wo er nach einiger Zeit unter der Last des darüber abgelagerten Mülls zusammengedrückt wurde.

### Beispiel 4

Es wurde ein kombinierter Brei unter Verwendung von 100 g Papierfasern, 2 g kaltquellender Stärke und 2 g Kaolin mit 10 Liter Wasser zubereitet. Nach einer Rührzeit von 30 Minuten bei Raumtemperatur wurden 20 g Latexmilch (50 % Trockenmasse) zugegeben und nach 5-minütiger Einwirkungszeit unter weiterem Rühren geschöpft. Hierzu wurde ein becherförmiges Sieb mit 1 mm Maschenweite verwendet. Der geschöpfte Brei wurde im abgetropften Sieb (Abtropfzeit 10 min) bei + 95 °C im Wärmeschrank 30 Minuten vorgetrocknet.

Anschließend wurde der vorgetrocknete, noch labile Becher in eine becherförmige Unterlage eingepreßt. Dann erfolgte eine Trocknung im Wärmeschrank bei +95 °C über 45 Minuten. Das Gewicht des getrockneten Latex-Fasermaterials entsprach einem Schichtgewicht von 300 g/m².

Der getrocknete Becher wurde beidseitig gleichmäßig mit Latexmilch beschichtet. Die Beschichtungsmenge betrug ca. 50 g/m². Die anschließende Trocknung erfolgte zuerst bei +95 °C im Wärmeschrank und danach im Mikrowellenherd bei 360 Watt über 2 Minuten.

### Beispiel 5

Ein nicht kaschierter Karton mit einem Flächengewicht von 700 g/m² wurde mit einer Sprühvorrichtung mit Latexmilch gleichmäßig beschichtet. Die Beschichtung erfolgte mit einem Druckluftzerstäuber. Die Auftragmenge betrug 1 g Latexmilch mit 50 % Trockenmasse pro 100 cm² Kartonfläche. Die Trocknung erfolgte bei +95 °C im Wärmeschrank über 30 Minuten.

Nach dem Abkühlen wurde für einen in Beispiel 3 beschriebenen Joghurtbecher ein runder Deckel ausgestanzt. Außerdem wurde ein Zuschnitt für die Becherwand eines Joghurtbechers hergestellt. Das Bodenteil des Joghurtbechers wurde durch Ausstanzen und Kröpfen hergestellt. Der Zuschnitt und das Bodenteil wurden adhäsiv zu einem Becher zusammengefügt. Der befüllte Joghurtbecher wurde mit dem latexbeschichteten Kartondeckel adhäsiv verschlossen.

### Beispiel 6

Verschiedene Muster der Behälter und Packungen nach den vorherigen Beispielen wurde nach Gebrauch vorsichtig in Kompost vergraben und dort gelagert. Nach vier Wochen wurde geprüft, ob und wie weit die Behälter verrottet waren.

Behälter, deren Wandungen aus einer Dauerbackware bestanden, waren im wesentlichen vollständig kompostierbar. Behälter ohne Beschichtung der Oberfläche waren vollständig verrottet. Bei beschichteten Bechern konnten noch Überreste der Beschichtungshaut festgestellt werden, die jedoch unter mechanischer Belastung zerfielen.

Die übrigen erfindungsgemäßen Behälter waren nach vier Wochen noch nicht vollständig verrottet. Sie waren jedoch bereits angequollen und mechanisch leicht zu zerkleinern. Nach einem ausreichend langen Zeitraum waren aber auch diese Behälter im wesentlichen vollständig verrottet.

## Patentansprüche

1. Behälter, insbesondere verrottbarer Behälter, mit Wandungen auf Basis von Polysaccharid-Material, dadurch gekennzeichnet, daß das Material der Wandungen im Innern mit einem Kautschuk imprägniert ist und/oder mindestens ein Teil der Oberfläche der Wandungen mit mindestens einer Kautschukschicht versehen ist.

2. Behälter nach Anspruch 1, dadurch gekennzeichnet, daß das Polysaccharid-Material ein solches auf Basis Cellulose, Stärke und/oder Getreide ist.

3. Behälter nach Anspruch 1 oder 2, dadurch gekennzeichnet, daß der Kautschuk im Wandungsmaterial gleichmäßig verteilt ist.

4. Behälter nach einem der vorhergehenden Ansprüche, dadurch gekennzeichnet, daß die Behälterwandungen aus einem das Polysaccharid-Material und vorzugsweise den Kautschuk enthaltenden Brei oder Teig geformt sind.

5. Behälter nach einem der vorhergehenden Ansprüche, dadurch gekennzeichnet, daß das Wandungsmaterial 1 bis 50 Gew%, vorzugsweise 3 bis 25 Gew%, vorzugsweise 5 bis 10 Gew% Kautschuk, bezogen auf die Trockensubstanz, enthält.

6. Behälter nach einem der vorhergehenden Ansprüche, dadurch gekennzeichnet, daß der Kautschuk ein Naturkautschuk ist.

7. Behälter nach einem der vorhergehenden Ansprüche, dadurch gekennzeichnet, daß die Wandstärke der Kautschukschicht 1 bis 800 µm, insbesondere 20 bis 200 µm beträgt.

8. Behälter nach einem der vorhergehenden Ansprüche, dadurch gekennzeichnet, daß das Wandungsmaterial mit Kautschuk imprägnierte und/oder beschichtete Pappe oder Karton ist.

9. Behälter nach einem der Ansprüche 1 bis 7, dadurch gekennzeichnet, daß das Material der Wandungen aus einer Dauerbackware besteht.

10. Behälter nach einem der Ansprüche 4 bis 9, dadurch gekennzeichnet, daß der Kautschuk zusammen mit dem Teig gebacken ist.

11. Behälter nach einem der Ansprüche 1 bis 7, 9 oder 10, dadurch gekennzeichnet, daß er aus einem Stärketeig, insbesondere einem Teig von nicht aufgeschlossener Stärke gebacken ist.

12. Behälter nach einem der der vorhergehenden Ansprüche, dadurch gekennzeichnet, daß er mindestens teilweise gefüllt ist.

13. Behälter nach Anspruch 12, dadurch gekennzeichnet, daß er mit einem Inhalt auf wäßriger und/oder öliger Basis gefüllt ist.

14. Verwendung des Behälters nach einem der vorhergehenden Ansprüche als im wesentlichen verrottbare Wegwerfpackung.

15. Verwendung des Behälters nach einem der Ansprüche 1 bis 13 und insbesondere nach Anspruch 14 als Behälter für zum Erhitzen im Mikrowellenherd bestimmte Nahrungsmittel.

16. Verfahren zur Herstellung des Behälters nach einem der Ansprüche 1 bis 13, dadurch gekennzeichnet, daß ein für die Herstellung von Behälterwandungen rezeptierter Brei oder Teig auf Basis von Polysacchariden unter Verwendung einer kautschukhaltigen Masse hergestellt und zu Behälterwandungen geformt und getrocknet wird und/oder
Wandungsmaterial auf Polysaccharid-Basis an mindestens einem Teil seiner Oberfläche mit mindestens einer Schicht aus einem kautschukhaltigen Material versehen wird.

17. Verfahren nach Anspruch 16, dadurch gekennzeichnet, daß der Behälter unmittelbar aus dem Brei oder Teig geformt wird.

18. Verfahren nach Anspruch 16 oder 17, dadurch gekennzeichnet, daß ein für die Herstellung einer Dauerbackware rezeptierter Teig unter Verwendung einer kautschukhaltigen Masse hergestellt, zum Behälter geformt und gebacken wird und/oder Behälterwandungen eines vorgebackenen Behälters mindestens an einem Teil ihrer Oberfläche mit einer kautschukhaltigen Masse mindestens einmal beschichtet und getrocknet werden.

19. Verfahren nach einem der Ansprüche 16 bis 18, dadurch gekennzeichnet, daß ein vorgeformter Behälter an mindestens einem Teil seiner Oberfläche mit mindestens einer Schicht aus einem kautschukartigen Material versehen, insbesondere mit einer kautschukhaltigen Masse beschichtet wird.

20. Verfahren nach einem der Ansprüche 16 oder 19, dadurch gekennzeichnet, daß flächiges, vorzugsweise bereits mit Kautschuk imprägniertes Cellulosematerial, insbesondere Karton oder Pappe, an mindestens einer Seite mindestens einmal mit einer Schicht aus einem kautschukhaltigen Material versehen wird und der Behälter aus dem beschichteten Material gefertigt wird.

21. Verfahren nach einem der Ansprüche 16 bis 20, dadurch gekennzeichnet, daß als kautschukhaltiges Material, mindestens für den Brei oder Teig eine Latexmilch verwendet wird.

22. Verfahren nach einem der Ansprüche 16 bis 21, dadurch gekennzeichnet, daß als kautschukhaltiges Material für die Beschichtung der Wandungen eine Latexmilch, insbesondere in konzentrierter Form, verwendet wird.

23. Verfahren nach einem der Ansprüche 16 bis 22, dadurch gekennzeichnet, daß für die Beschichtung eine ein Verdickungsmittel enthaltende Latexmilch verwendet wird, die ggf. weitere Füllstoffe enthält.

24. Verfahren nach einem der Ansprüche 16 bis 23, dadurch gekennzeichnet, daß das Kautschukmaterial, insbesondere das für die Beschichtung vorgesehene Kautschukmaterial, insbesondere die Latexmilch, vor ihrer Anwendung bei erhöhter Temperatur, insbesondere bei 130 bis 135 °C, sterilisiert wird.

25. Verfahren nach einem der Ansprüche 16 bis 24, dadurch gekennzeichnet, daß mindestens die gesamte Innenfläche und vorzugsweise die gesamte Oberfläche des Behälters mit Kautschuk beschichtet wird.

26. Verfahren nach einem der Ansprüche 16 bis 25, dadurch gekennzeichnet, daß die mit Kautschuk zu versehenden Oberflächen des Behälters beim Formen und insbesondere beim Backen feinporig bis glatt ausgebildet werden.

## Claims

1. Container, particularly biodegradable container, with walls based on a polysaccharide material, characterized in that the material of the walls is internally impregnated with a rubber and/or at least part of the surface of the walls is provided with at least one rubber coating.

2. Container according to claim 1, characterized in that the polysaccharide material is based on cellulose, starch and/or cereals.

3. Container according to claim 1 or 2, characterized in that the rubber is uniformly distributed in the wall material.

4. Container according to one of the preceding claims, characterized in that the container walls are formed from a paste or dough containing the polysaccharide material and preferably the rubber.

5. Container according to one of the preceding claims, characterized in that the wall material contains 1 to 50, preferably 3 to 25 and more especially 5 to 10% by weight rubber, based on the dry substance.

6. Container according to one of the preceding claims, characterized in that the rubber is a natural rubber.

7. Container according to one of the preceding claims, characterized in that the wall thickness of the rubber coating is 1 to 800 and in particular 20 to 200 µm.

8. Container according to one of the preceding claims, characterized in that the wall material is cardboard or carton impregnated and/or coated with rubber.

9. Container according to one of the claims 1 to 7, characterized in that the wall material comprises a long-life baked product.

10. Container according to one of the claims 4 to 9, characterized in that the rubber is baked together with the dough.

11. Container according to one of the claims 1 to 7, 9 or 10, characterized in that it is baked from a starch dough, particularly an unhydrolyzed starch dough.

12. Container according to one of the preceding claims, characterized in that it is at least partly filled.

13. Container according to claim 12, characterized in that it is filled with an aqueous and/or oily based content.

14. Use of the container according to one of the preceding claims as a substantially biodegradable disposable pack.

15. Use of the container according to one of the claims 1 to 13, and in particular according to claim 14 as a container for heating foods in a microwave oven.

16. Process for the production of the container according to one of the claims 1 to 13, characterized in that a polysaccharide-based dough or paste formulated for producing the container walls is produced using a rubber-containing mass and shaped and dried to container walls and/or a polysaccharide-based wall material is provided on at least part of its surface with at least one rubber-containing material coating.

17. Process according to claim 16, characterized in that the container is directly shaped from paste or dough.

18. Process according to claim 16 or 17, characterized in that a dough formulated for producing a long-life baked product is produced using a rubber-containing mass, shaped into a container and baked and/or the container walls of a prebaked container on at least part of their surface are coated at least once with a rubber-containing mass and dried.

19. Process according to one of the claims 16 to 18, characterized in that a preshaped container is provided on at least part of its surface with at least one coating of a rubber-like material and in particular coated with a rubber-containing mass.

20. Process according to one of the claims 16 or 19, characterized in that the flat and preferably already rubber-impregnated cellulose material, particularly carton or cardboard, is provided on at least one side at least once with a coating of a rubber-containing material and the container is produced from the coated material.

21. Process according to one of the claims 16 to 20, characterized in that as the rubber-containing material, at least for the paste or dough use is made of a latex milk.

22. Process according to one of the claims 16 to 21, characterized in that as the rubber-containing material for the coating of the walls use is made of a latex milk, particularly in concentrated form.

23. Process according to one of the claims 16 to 22, characterized in that for the coating use is made of a thickener-containing latex milk, which optionally contains further fillers.

24. Process according to one of the claims 16 to 23, characterized in that the rubber material, particularly that used for the coating and in particular the latex milk, is sterilized at elevated temperature, particularly at 130 to 135°C prior to use.

25. Process according to one of the claims 16 to 24, characterized in that at least the entire inner surface and preferably the entire surface of the container is coated with rubber.

26. Process according to one of the claims 16 to 25, characterized in that the container surfaces to be provided with the rubber are made fine-pored to smooth during shaping and in particular baking.

## Revendications

1. Récipient, en particulier biodégradable, pourvu de parois en matériau à base de polysaccharides, caractérisé en ce que le matériau de la paroi est intérieurement imprégné d'un caoutchouc, et/ou en ce qu'au moins une partie de la surface des parois est recouverte d'au moins une couche de caoutchouc.

2. Récipient selon la revendication 1, caractérisé en ce que la matière polysaccharidique est à base de cellulose, d'amidon et/ou de céréales.

3. Récipient selon la revendication 1 ou 2, caractérisé en ce que le caoutchouc est régulièrement distribué dans la matière des parois.

4. Récipient selon l'une des revendications précédentes, caractérisé en ce que les parois du récipient sont formées à partir d'une bouillie ou d'une pâte contenant la matière polysaccharidique, et de préférence le caoutchouc.

5. Récipient selon l'une des revendications précédentes, caractérisé en ce que le matériau des parois contient 1 à 50 % en poids, de préférence 3 à 25 % en poids, et plus préférablement 5 à 10 % en poids de caoutchouc rapporté à la matière sèche.

6. Récipient selon l'une des revendications précédentes, caractérisé en ce que le caoutchouc est un caoutchouc naturel.

7. Récipient selon l'une des revendications précédentes, caractérisé en ce que l'épaisseur de la couche de caoutchouc est de 1 à 800 µm, en particulier de 20 à 200 µm.

8. Récipient selon l'une des revendications précédentes, caractérisé en ce que le matériau des parois est du carton-pâte ou du carton, imprégné de caoutchouc.

9. Récipient selon l'une des revendications 1 à 7, caractérisé en ce que le matériau des parois consiste en une pâtisserie de longue conservation.

10. Récipient selon l'une des revendications 4 à 9, caractérisé en ce que le caoutchouc est cuit avec la pâte.

11. Récipient selon l'une des revendications 1 à 7, 9 ou 10, caractérisé en ce qu'il est cuit à partir d'une pâte d'amidon, en particulier une pâte d'amidon non hydrolysé.

12. Récipient selon l'une des revendications précédentes, caractérisé en ce qu'il est rempli au moins partiellement.

13. Récipient selon la revendication 12, caractérisé en ce qu'il est rempli d'un contenu à base aqueuse et/ou oléagineuse.

14. Utilisation du récipient selon l'une des revendications précédentes comme emballage jetable essentiellement biodégradable.

15. Utilisation du récipient selon l'une des revendications 1 à 13, et en particulier selon la revendication 14, comme récipient pour produits alimentaires à réchauffer au four à micro-ondes.

16. Procédé de fabrication du récipient selon l'une des revendications 1 à 13, caractérisé en ce qu'une bouillie ou une pâte à base de polysaccharides, dont la recette a été élaborée pour la fabrication de parois de récipients, est fabriquée en utilisant une composition renfermant du caoutchouc et est moulée et séchée pour constituer des parois de récipients, et/ou en ce que le matériau des parois à base de polysaccharides est recouvert, au moins sur une partie de sa surface, d'au moins une couche de matière renfermant du caoutchouc.

17. Procédé selon la revendication 16, caractérisé en ce que le récipient est moulé directement à partir de la bouillie ou de la pâte.

18. Procédé selon la revendication 16 ou 17, caractérisé en ce qu'une pâte élaborée pour la fabrication d'une pâtisserie de longue conservation est fabriquée en utilisant une composition renfermant du caoutchouc, est moulée et cuite à la forme d'un récipient et/ou en ce que des parois d'un récipient précuit sont recouvertes, au moins une fois, et au moins sur une partie de leur surface, d'une couche de composition renfermant du caoutchouc, et séchées.

19. Procédé selon l'une des revendications 16 à 18, caractérisé en ce qu'un récipient préformé est recouvert, au moins sur une partie de sa surface, d'au moins un couche de matière du genre caoutchouc, en particulier d'une composition renfermant du caoutchouc.

20. Procédé selon l'une des revendications 16 ou 19, caractérisé en ce que de la matière cellulosique en nappe, en particulier du carton ou du carton-pâte, de préférence déjà imprégnée de caoutchouc, est recouverte, au moins d'un coté et au moins une fois, d'une couche de matière renfermant du caoutchouc, et en ce que le récipient est fabriqué au départ de la matière recouverte.

21. Procédé selon l'une des revendications 16 à 20, caractérisé en ce qu'on utilise un lait de latex comme matériau renfermant du caoutchouc, au moins pour la bouillie ou la pâte.

22. Procédé selon l'une des revendications 16 à 21, caractérisé en ce qu'on utilise un lait de latex, particulièrement sous forme concentrée, comme matériau renfermant du caoutchouc pour le revêtement des parois.

23. Procédé selon l'une des revendications 16 à 22, caractérisé en ce que pour le revêtement, on utilise un lait de latex contenant un épaississant et éventuellement d'autres charges.

24. Procédé selon l'une des revendications 16 à 23, caractérisé en ce que le matériau de caoutchouc, en particulier le matériau de caoutchouc prévu pour réaliser le revêtement, en particulier le lait de latex, est stérilisé à une température rehaussée en particulier à une température de 130 à 135 °C, avant son utilisation.

25. Procédé selon l'une des revendications 16 à 24, caractérisé en ce qu'au moins toute la surface intérieure, et, de préférence, toute la surface du récipient est recouverte de caoutchouc.

26. Procédé selon l'une des revendications 16 à 25, caractérisé en ce que les surfaces du récipient devant être recouvertes de caoutchouc prennent un aspect allant de finement poreux à lisse au cours de leur formation, et en particulier de leur cuisson.
